# EUROPEAN PATENT APPLICATION

(11) **EP 3 144 131 A1**
(43) Date of publication of application: **22.03.2017**
(21) Application number: 16183373.6
(22) Date of filing: 09.08.2016
(51) Int. Cl.: B29D 30/32

(54) **TIRE MANUFACTURING METHOD**

(30) Priority: 18.09.2015 JP 2015185378
(71) Applicant: SUMITOMO RUBBER INDUSTRIES LIMITED, Kobe-shi, Hyogo-ken (JP)
(72) Inventor: TAKENAKA, Kouji, Kobe-shi, Hyogo 651-0072 (JP)
(74) Representative: Manitz, Finsterwald & Partner GbR

(57) **Abstract**

A tire bead carcass member manufacturing step includes a ply turning-up step, a ply layering step, and a ply turning-down step. In the ply turning-down step, an outer circumferential surface 32a of a ply layered body 32 is supported. While the ply layered body 32 is rotated, a turning-down stitcher 38 turns down axial end portions of a second ply around beads from the radially outer side toward the radially inner side. While the ply layered body 32 is rotated, a layering stitcher 40 operates so as to layer the axial end portions of the second ply having been turned down to an inner side of the ply layered body 32, over an inner circumferential surface of a first ply, to form the bead carcass member.

## Description

This application claims priority on Patent Application No. 2015-185378 filed in JAPAN on September 18, 2015. The entire contents of this Japanese Patent Application are hereby incorporated by reference.

### BACKGROUND OF THE INVENTION

### Field of the Invention

The present invention relates to a tire manufacturing method. Specifically, the present invention relates to a tire manufacturing method for manufacturing a tire in which a carcass is turned down around beads.

### Description of the Related Art

JP7-68661 discloses a tire manufacturing method. In the manufacturing method, a second carcass ply is turned back around beads from the outer side toward the inner side in the axial direction. In the tire, the end portions of the second carcass ply are turned back around the beads from the outer side toward the inner side in the axial direction in a state where the inner side portions, in the axial direction, around the beads are supported. In the second carcass ply, by the second carcass ply being turned back, a main portion that is extended on and between the paired beads, and turned-back portions positioned inward of the beads in the radial direction, are formed.

In the tire, a main portion of a first carcass ply is extended on and between the paired beads on the axially inner side. The main portion of the second carcass ply is extended on and between the paired beads on the axially outer side. In the tire, the beads are sandwiched between the main portion of the first carcass ply and the main portion of the second carcass ply in the axial direction. By the first carcass ply and the second carcass ply being provided, stiffness of the tire can be appropriately improved. In the tire, the improvement of stiffness allows improvement of ride comfort and steering stability.

In the tire manufacturing method disclosed in JP7-68661, in a state where the inner side portions, in the axial direction, of the beads are supported, the end portions of the second carcass ply are turned back. Therefore, the end portions of the second carcass ply are positioned inward of the beads in the radial direction. In this method, since the axially inner side portions of the beads are supported, the end portions of the second carcass ply cannot be extended up to the axially inner sides of the beads.

In the tire vulcanization step, the main portion of the second carcass ply is drawn radially outward around the beads. In the tire, the end portions of the second carcass ply are not extended up to the axially inner sides of the beads, and positional displacement of the end portions of the second carcass ply is likely to occur. This positional displacement may cause variation in stiffness among tires.

The end portions of the second carcass ply are extended up to the axially inner sides of the beads, whereby the positional displacement of the end portions of the second carcass ply can be reduced. Thus, variation in stiffness among tires can be reduced. However, it is difficult to extend the end portions of the second carcass ply up to the axially inner sides of the beads in the conventional manufacturing method.

An object of the present invention is to provide a tire manufacturing method for manufacturing a tire in which a carcass ply is turned down.

### SUMMARY OF THE INVENTION

A tire manufacturing method according to the present invention includes: a manufacturing step of manufacturing a bead carcass member; a preforming step; and a vulcanization step.

The manufacturing step of manufacturing the bead carcass member includes:
a ply turning-up step of turning up axial end portions of a first ply having been cylindrically wound, around bead members from a radially inner side toward a radially outer side, to form a ply turned-up body;
a ply layering step of layering a second ply over an outer circumferential surface of the ply turned-up body to form a ply layered body; and
a ply turning-down step of turning down axial end portions of the second ply in the ply layered body, around the bead members from the radially outer side toward the radially inner side, to form the bead carcass member.

In the ply turning-down step,
the ply layered body is supported at an outer circumferential surface thereof.

While the ply layered body is rotated, the axial end portions of the second ply are turned down around the bead members from the radially outer side toward the radially inner side.

While the ply layered body is rotated, the axial end portions of the second ply having been turned down to an inner side of the ply layered body are layered over an inner circumferential surface of the ply layered body, to form the bead carcass member.

In the preforming step, a raw cover including the bead carcass member is formed. In the vulcanization step, the raw cover is placed in a mold, and is vulcanized and molded to obtain a tire.

Preferably, the first ply is supported on an outer circumferential surface of a drum in the ply turning-up step. The ply turned-up body is supported on the outer circumferential surface of the drum in the ply layering step.

Preferably, in the ply turning-down step, the outer circumferential surface of the ply layered body is supported by a first receiver table. The axial end portions of the second ply having been turned down to the inner side of the ply layered body are layered over the inner circumferential surface of the ply layered body by a layering stitcher while the ply layered body is rotated. The first receiver table and the layering stitcher rotate the ply layered body.

Preferably, in the ply turning-down step, the axial end portions of the second ply are turned down around the bead members from the radially outer side toward the radially inner side by a turning-down stitcher while the ply layered body is rotated. When the turning-down stitcher turns down the axial end portions of the second ply from an axially outer side toward an axially inner side, the layering stitcher is positioned axially inward of the axial end portions of the second ply having been turned down.

Preferably, in the ply turning-down step, the outer circumferential surface of the ply layered body is supported by a second receiver table. The first receiver table and the second receiver table are spaced from each other in a circumferential direction of the ply layered body. A center of rotation of the ply layered body is between the first receiver table and the second receiver table in a horizontal direction.

Preferably, the turning-down stitcher is positioned between the first receiver table and the second receiver table in the circumferential direction of the ply layered body.

Preferably, in the ply turning-down step, the outer circumferential surface of the ply layered body is supported by a third receiver table. The first receiver table, the second receiver table, and the third receiver

table are spaced from each other in the circumferential direction of the ply layered body.

Preferably, the bead members include cores. Each core has an inner diameter D, and the inner diameter D is less than or equal to 600 mm.

A manufacturing method for manufacturing a bead carcass member for a tire according to the present invention includes:
a ply turning-up step of turning up axial end portions of a first ply having been cylindrically wound, around bead members from a radially inner side toward a radially outer side, to form a ply turned-up body;
a ply layering step of layering a second ply over an outer circumferential surface of the ply turned-up body to form a ply layered body; and
a ply turning-down step of turning down axial end portions of the second ply in the ply layered body, around the bead members from the radially outer side toward the radially inner side, to form the bead carcass member.

In the ply turning-down step,
the ply layered body is supported at an outer circumferential surface thereof.

While the ply layered body is rotated, the axial end portions of the second ply are turned down around the bead members from the radially outer side toward the radially inner side.

While the ply layered body is rotated, the axial end portions of the second ply having been turned down to an inner side of the ply layered body are layered over an inner circumferential surface of the ply layered body, to form the bead carcass member.

In the manufacturing method for manufacturing the bead carcass member according to the present invention, the axial end portions of the second ply are easily turned down around the bead members. This method allows a carcass ply to be easily turned back around the beads of the tire from the axially outer side toward the axially inner side.

### BRIEF DESCRIPTION OF THE DRAWINGS

FIG. 1 is a cross-sectional view of a tire manufactured by a manufacturing method according to one embodiment of the present invention;
FIG. 2(a) illustrates a first-ply turning-up step of the manufacturing method according to one embodiment of the present invention, and FIG. 2(b) illustrates a second-ply layering step thereof;
FIG. 3 illustrates a ply turning-down machine used for the manufacturing method according to one embodiment of the present invention;
FIG. 4(a) illustrates a second-ply turning-down step of the manufacturing method according to one embodiment of the present invention, and FIG. 4(b) illustrates another second-ply turning-down step thereof;
FIG. 5(a) illustrates still another second-ply turning-down step, FIG. 5(b) illustrates still another second-ply turning-down step, and FIG. 5(c) illustrates still another second-ply turning-down step; and
FIG. 6(a) illustrates still another second-ply turning-down step, FIG. 6(b) illustrates still another second-ply turning-down step, and FIG. 6(c) illustrates still another second-ply turning-down step.

### DESCRIPTION OF THE PREFERRED EMBODIMENTS

The following will describe in detail the present invention based on preferred embodiments with reference to the accompanying drawing.

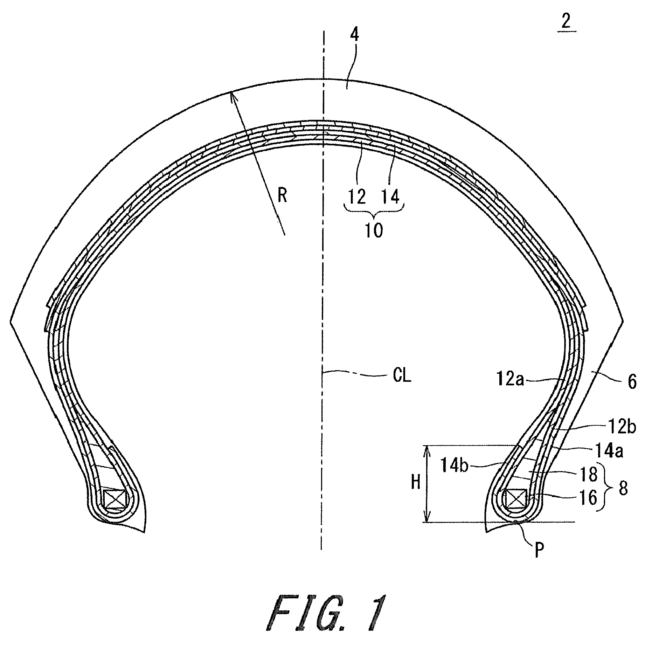

FIG. 1 illustrates a pneumatic tire 2 manufactured by a manufacturing method according to the present invention. The tire 2 is mounted to a two-wheeled automotive vehicle. The tire 2 is for front wheels. In FIG. 1, the up-down direction represents the radial direction of the tire 2, the left-right direction represents the axial direction of the tire 2, and the direction orthogonal to the surface of the drawing sheet represents the circumferential direction of the tire 2. In FIG. 1, an alternate long and short dash line CL represents the equator plane of the tire 2. The tire 2 has a shape that is almost bilaterally symmetric with respect to the equator plane.

The tire 2 includes a tread 4, a pair of sidewalls 6, a pair of beads 8, and a carcass 10. The sidewalls 6 extend almost inward from the ends, respectively, of the tread 4 in the radial direction. The beads 8 are positioned almost inward of the sidewalls 6, respectively, in the radial direction. The carcass 10 is extended between one of the beads 8 and the other of the beads 8 along the inner sides of the tread 4 and the sidewalls 6.

The tread 4 forms a tread surface that can contact with a road surface. The sidewalls 6 absorb impact from the road surface due to their flexure. The sidewalls 6 prevent damage to the carcass 10. Each bead 8 includes a core 16, and an apex 18 that extends radially outward from the core 16. The core 16 is ring-shaped, and includes a non-stretchable wound wire. A typical material of the wire is steel. The apex 18 is tapered radially outward. The apex 18 is formed of a highly hard crosslinked rubber.

The carcass 10 includes a first carcass ply 12, and a second carcass ply 14 that is layered outside the first carcass ply 12. The first carcass ply 12 is turned up around the beads 8 from the inner side toward the outer side in the axial direction. By the first carcass ply 12 being turned up, the first carcass ply 12 includes a main portion 12a and turned-up portions 12b. The second carcass ply 14 is turned up around the beads 8 from the outer side toward the inner side in the axial direction. By the second carcass ply 14 being turned up, the second carcass ply 14 includes a main portion 14a and turned-up portions 14b.

The first carcass ply 12 includes a first carcass cord and a topping rubber, which are not shown. The first carcass cord is tilted relative to the equator plane. An absolute value of an angle of the tilt relative to the equator plane is greater than or equal to 60°, and not greater than 90°. The second carcass ply 14 includes a second carcass cord and a topping rubber. The second carcass cord is tilted relative to the equator plane. An absolute value of an angle of the tilt relative to the equator plane is greater than or equal to 60°, and not greater than 90°. In other words, the tire 2 is a radial tire. In the tire 2 in which the first carcass cord and the second carcass cord intersect each other, a direction in which the first carcass cord is tilted and a direction in which the second carcass cord is tilted are opposite to each other with respect to the equator plane. The absolute value of the tilt angle of the first carcass cord and the absolute value of the tilt angle of the second carcass cord are equal to each other. The first carcass cord and the second carcass cord are each formed from an organic fiber in general. Preferable examples of the organic fiber include polyester fibers, nylon fibers, rayon fibers, polyethylene naphthalate fibers, and aramid fibers.

In FIG. 1, an arrow R represents a radius of curvature of the tread 4 at the equator plane. Reference character P represents a radially inner end of the second carcass ply 14 that is turned up around the bead 8. A double-headed arrow H represents the height of the turned-up portion 14b of the second carcass ply 14. The height H is measured as a distance, in the radial direction, from the inner end P to the outer end of the turned-up portion 14b.

In the tire 2, the main portion 12a of the first carcass ply 12 is extended from the axially inner side of one of the beads 8 to the axially inner side of the other of the beads 8. In the main portion 12a, a tensile force acts on the axially inner sides of the paired beads 8. The main portion 14a of the second carcass ply 14 is extended from the axially outer side of one of the beads 8 to the axially outer side of the other of the beads 8. In the main portion 14a, a tensile force acts on the axially outer sides of the paired beads 8. In the carcass 10, a tensile force acts on both the axially inner side and the axially outer side of each of the paired beads 8. The beads 8 are surrounded by the main portion 12a and the main portion 14a in which the tensile force acts. The carcass 10 allows stiffness of the tire 2 to be appropriately improved in a range from the one of the beads 8 to the other of the beads 8.

In the tire 2, the turned-up portions 14b of the second carcass ply 14 are positioned axially inward of the beads 8. By the turned-up portions 14b, the second carcass ply 14 is assuredly fixed. Also in the vulcanization step of a process in which the tire 2 is manufactured, positional displacement of the second carcass ply 14 is inhibited. By the turned-up portions 14b being provided, variation in stiffness among the tires 2 is reduced.

In view of reducing the variation in stiffness, the height H of each turned-up portion 14b of the second carcass ply 14 is preferably greater than or equal to 10 mm and more preferably greater than or equal to 15 mm. Meanwhile, in the tire 2 in which the height H is great to some degree, even when the height H is further increased, further enhancement of an effect of reducing variation in stiffness cannot be expected. In this view point, the height H is preferably not greater than 40 mm.

A manufacturing method for manufacturing the tire 2 will be described. The manufacturing method includes a member preparing step, a preforming step, and a vulcanization step. In the member preparing step, members forming the components, of the tire 2, such as the tread 4, the sidewalls 6, the beads 8, and the carcass 10, are prepared. In the preforming step, the members forming the components of the tire 2 are assembled to obtain a raw cover (green tire). In the vulcanization step, the raw cover is placed in a mold. The raw cover is vulcanized and molded in the mold. The tire 2 is obtained from the raw cover.

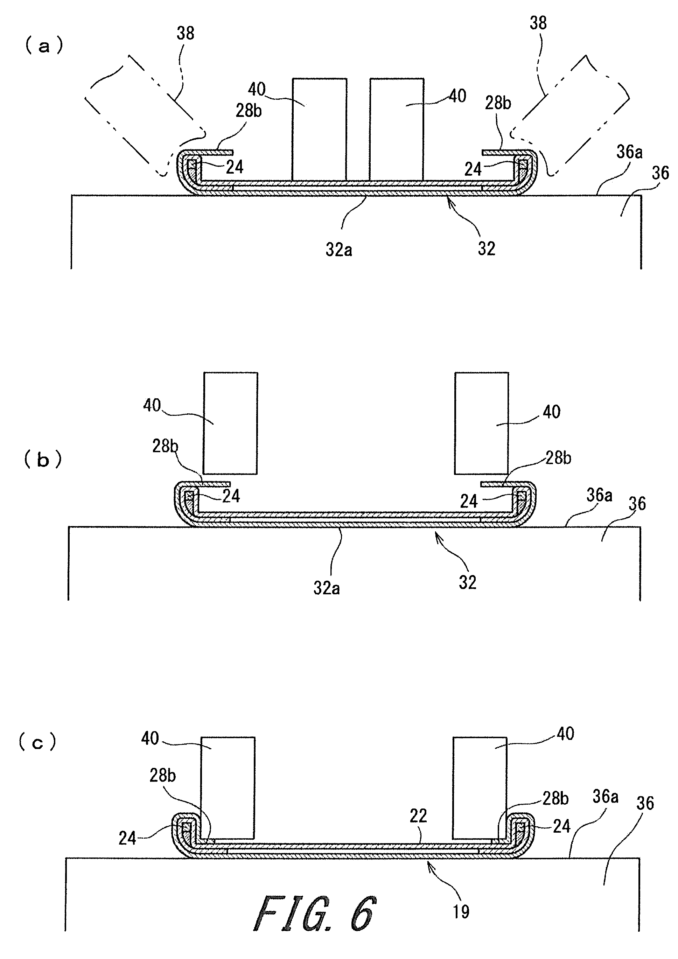

In the member preparing step, as one of the members forming the components of the tire 2, a bead carcass member 19 (see FIG. 6(c)) is prepared. The bead carcass member 19 is a member for forming the beads 8 and the carcass 10. The member preparing step includes a manufacturing step of manufacturing the bead carcass member 19.

The manufacturing step of manufacturing the bead carcass member 19 will be described. The manufacturing step includes a ply turning-up step, a ply layering step, and a ply turning-down step.

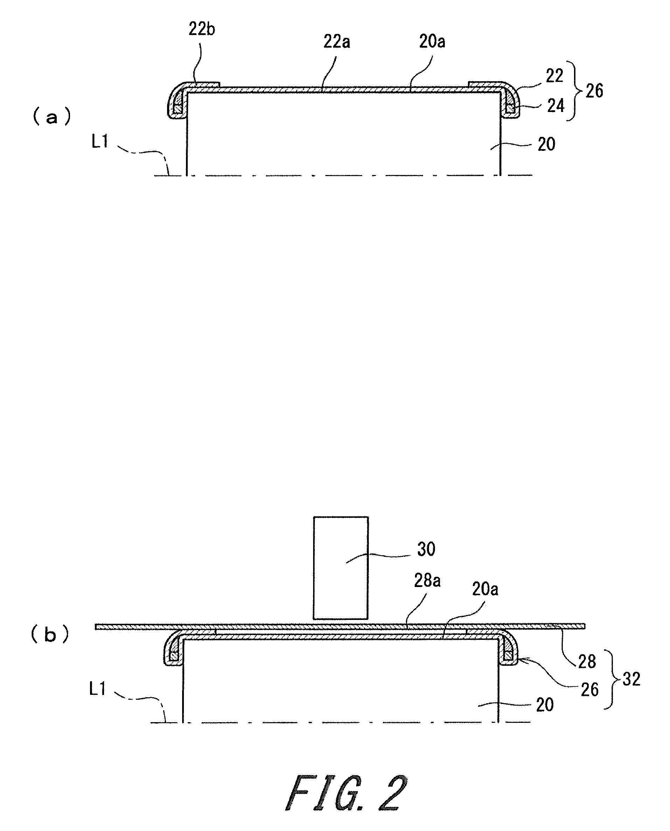

As shown in FIG. 2(a), in the ply turning-up step, a former 20 as a drum is prepared. The former 20 has a cylindrical shape. The former 20 has an outer circumferential surface 20a. In FIG. 2(a), an alternate long and short dash line L1 represents the axis of the former 20. The diameter of the former 20 can be enlarged and reduced in the radial direction thereof. The former 20 can rotate about the axis L1 that acts as a rotation axis.

In the ply turning-up step, the former 20 is rotated. A first ply 22 is wound, around the former 20 that is rotating, upon the outer circumferential surface 20a of the former 20. The first ply 22 is formed into a cylindrical shape. The first ply 22 is a member for forming the first carcass ply 12. A main portion 22a of the first ply 22 is wound around the former 20 upon the outer circumferential surface 20a of the former 20. An inner circumferential surface of the main portion 22a of the first ply 22 is supported on the outer circumferential surface 20a of the former 20. In the description herein, the first ply 22 is wound upon the outer circumferential surface 20a. A rubber sheet member may be wound upon the outer circumferential surface 20a. The first ply 22 may be cylindrically wound upon the outer circumferential surface of the rubber sheet member.

End portions 22b, in the axial direction, of the first ply 22 having been cylindrically wound are extended axially outward of the former 20. Bead members 24 are disposed on the radially outer sides of the end portions 22b. The former 20 includes a pair of end surfaces that extend radially inward from the outer circumferential surface 20a. The end surface is a plane that is orthogonal to the axial direction of the former 20. The paired bead members 24 are positioned by the end surfaces and are spaced from each other by a predetermined distance in the axial direction. The bead members 24 are members for forming the beads 8. The end portions 22b are turned up around the bead members 24 from the inner side toward the outer side in the radial direction. The end portions 22b having been turned up are layered over the main portion 22a. In this manner, a ply turned-up body 26 that includes the first ply 22 and the bead members 24 is formed.

In the present invention, turning a ply or the like around each bead member 24 from the inner side toward the outer side in the radial direction is referred to as "turn up". Meanwhile, turning a ply or the like around each bead member 24 from the outer side toward the inner side in the radial direction is referred to as "turn down".

As shown in FIG. 2(b), in the ply layering step, the ply turned-up body 26 is wound around the former 20 upon the outer circumferential surface 20a of the former 20. The inner circumferential surface of the ply turned-up body 26 is supported on the outer circumferential surface 20a of the former 20. The former 20 is rotated. A second ply 28 is wound upon the outer circumferential surface of the ply turned-up body 26. The second ply 28 is formed into a cylindrical shape. The second ply 28 is a member for forming the second carcass ply 14.

In the ply layering step, a stitcher 30 which is rotating, presses the axially center portion of a main portion 28a of the second ply 28 onto the outer circumferential surface of the ply turned-up body 26. The stitcher 30 moves in a range from one end of the outer circumferential surface 20a of the former 20 to the other end thereof in the axial direction. In this manner, the second ply 28 is cylindrically layered over the outer circumferential surface of the ply turned-up body 26, to form a ply layered body 32. In FIG. 2(b), a gap is between the main portion 28a of the second ply 28 and the main portion 22a of the first ply 22. However, in the ply layered body 32, the main portion 28a is adhered against the main portion 22a.

The ply layered body 32 is held by a not-illustrated conveying device. The diameter of the former 20 is reduced. The ply layered body 32 is moved in the axial direction. The ply layered body 32 is removed from the former 20.

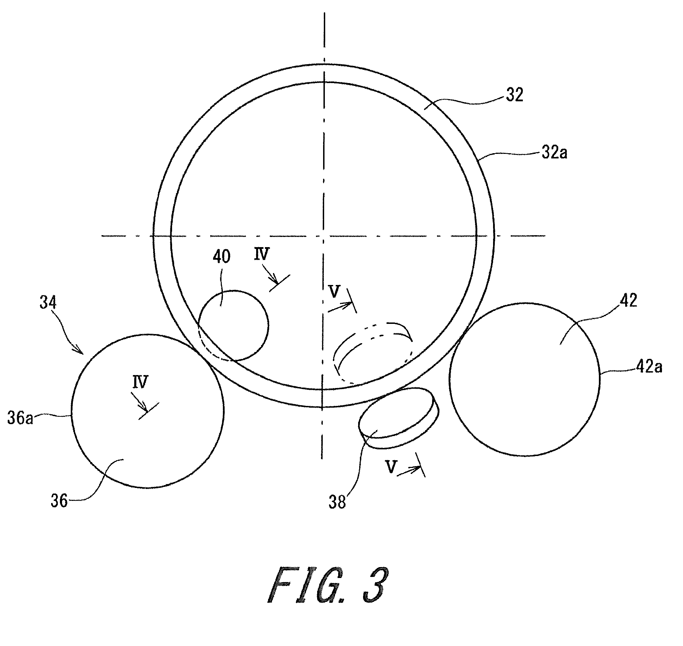

FIG. 3 illustrates: a part of a ply turning-down machine 34 used in a second-ply turning-down step; and the ply layered body 32. The not-illustrated conveying device conveys the ply layered body 32 to the ply turning-down machine 34. The ply turning-down machine 34 includes a first roller 36 that serves as a first receiver table, turning-down stitchers 38, layering stitchers 40, and a second roller 42 that serves as a second receiver table. In FIG. 3, the left-right direction represents the front-rear direction of the ply turning-down machine 34. In FIG. 3, the direction perpendicular to the drawing sheet represents the left-right direction of the ply turning-down machine 34. The front-rear direction and the left-right direction of the ply turning-down machine 34 are also the horizontal direction. In FIG. 3, the direction perpendicular to the drawing sheet represents the axial direction of the ply layered body 32 placed in the ply turning-down machine 34.

The first roller 36 has a cylindrical shape. The first roller 36 can be rotated about its axis that acts as the rotation axis by a not-illustrated driving device.

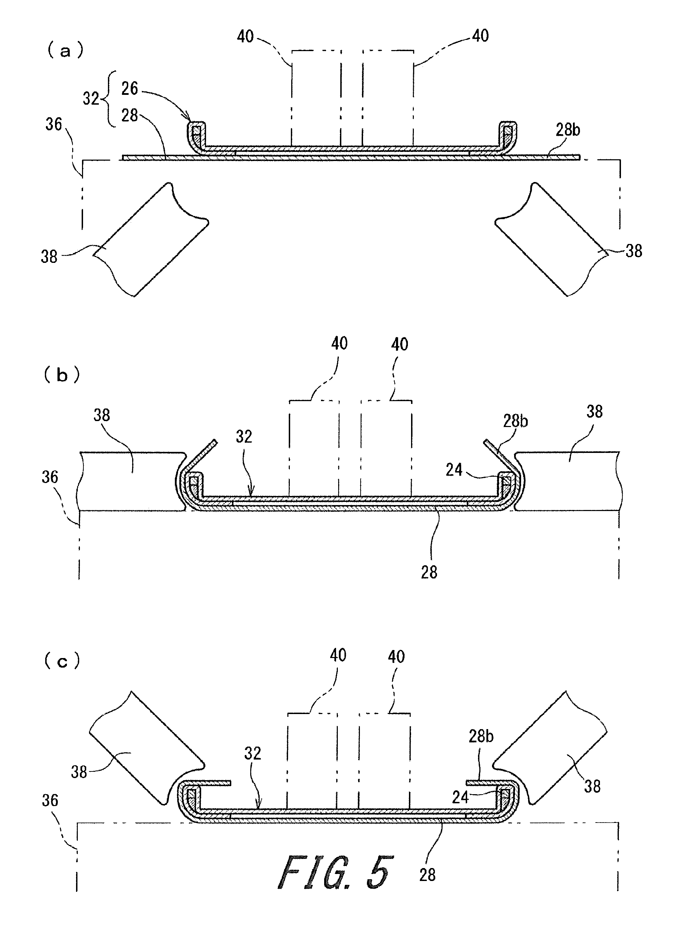

The ply turning-down machine 34 has a pair of left and right turning-down stitchers 38 (see FIG. 5(a)). Each turning-down stitcher 38 is almost disk-shaped. Each turning-down stitcher 38 is supported so as to be rotatable about its axis that acts as the rotation axis. The turning-down stitchers 38 can be moved around the bead members 24 in the radial direction of the ply layered body 32. In the circumferential direction of the ply layered body 32, the turning-down stitchers 38 are positioned between the first roller 36 and the second roller 42.

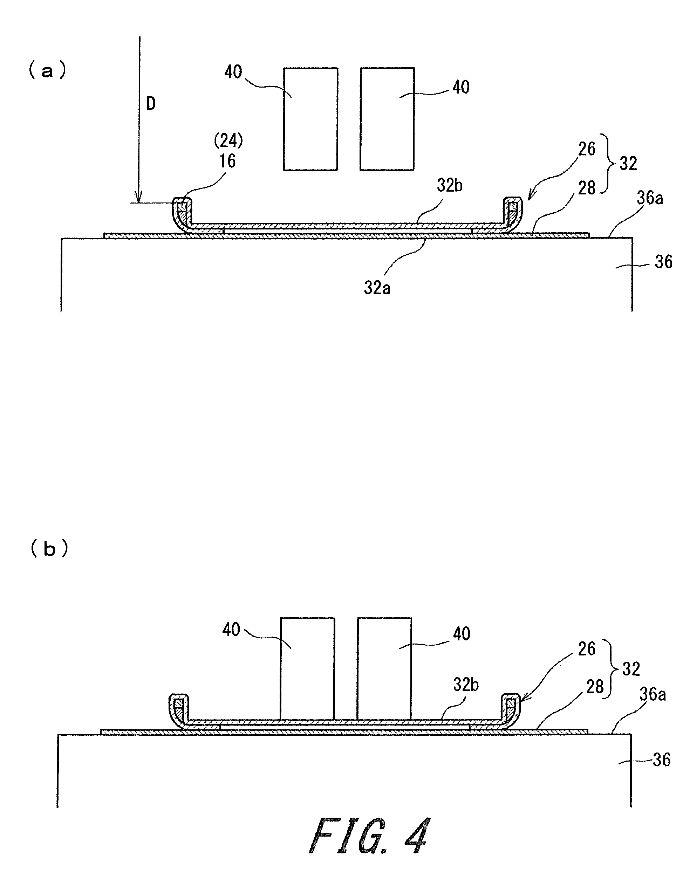

The ply turning-down machine 34 includes a pair of left and right layering stitchers 40 (see FIG. 4(a)). The layering stitchers 40 are almost disk-shaped. Each layering stitcher 40 can be rotated about its axis that acts as the rotation axis. The first roller 36 is disposed outward of the layering stitchers 40 in the radial direction. The rotation axis of each layering stitcher 40 is parallel to the rotation axis of the first roller 36. The layering stitchers 40 can be moved in the radial direction and the axial direction.

The second roller 42 is positioned in the rear of the first roller 36. The second roller 42 and the first roller 36 are spaced from each other in the circumferential direction of the ply layered body 32. The second roller 42 has a cylindrical shape. The second roller 42 can be rotated about its axis that acts as the rotation axis.

FIG. 4(a) and FIG. 4(b) show a cross-section taken along a line IV-IV in FIG. 3. In FIG. 4(a), an outer circumferential surface 32a of the ply layered body 32 is supported on an outer circumferential surface 36a of the first roller 36. The outer circumferential surface 32a of the ply layered body 32 is also supported on an outer circumferential surface 42a of the second roller 42, which is not shown. In FIG. 4(a), the first roller 36 and the second roller 42 support the ply layered body 32. In this state, the ply layered body 32 can be mounted to or removed from the ply turning-down machine 34.

In FIG. 4(a), the layering stitchers 40 are distant from the ply layered body 32. The layering stitchers 40 are in a stand-by orientation in which the layering stitchers 40 are at radially inward positions. The layering stitchers 40 in the stand-by orientation are positioned so as not to interfere with the ply layered body 32 when the ply layered body 32 is mounted to or removed from the ply turning-down machine 34.

In FIG. 4(a), a single-headed arrow D represents an inner diameter of the core 16 of the core member 24. The inner diameter D of the core 16 is measured at the radially inner end of the core 16.

In FIG. 4(b), the layering stitchers 40 are in contact with an inner circumferential surface 32b of the ply layered body 32. The layering stitchers 40 press the ply layered body 32 toward the first roller 36. The layering stitchers 40 are in a first pressing orientation. The ply layered body 32 is sandwiched between the first roller 36 and the layering stitchers 40. The first roller 36 and the layering stitchers 40 support the ply layered body 32. By rotating of the first roller 36, the ply layered body 32 sandwiched between the first roller 36 and the layering stitchers 40 is rotated about its axis that acts as the rotation axis. The first roller 36 and the layering stitchers 40 rotate the ply layered body 32. For example, in FIG. 3, the first roller 36 rotates clockwise, whereby the ply layered body 32 and the layering stitchers 40 rotate counterclockwise.

FIG. 5(a) to FIG. 5(c) show a cross-section taken along a line V-V in FIG. 3. In FIG. 5(a), the turning-down stitchers 38 are in a stand-by orientation. In the stand-by orientation, the turning-down stitchers 38 are positioned radially outward of the ply layered body 32. In FIG. 5(a), alternate long and two short dashes lines represent the first roller 36 and the layering stitchers 40 in the cross-section taken along the line IV-IV in FIG. 3. In FIG. 5(a), the layering stitchers 40 are in the first pressing orientation. The first roller 36 and the layering stitchers 40 sandwich the ply layered body 32 therebetween.

In FIG. 5(b), the turning-down stitchers 38 are positioned axially outward of the bead members 24. While the outer circumferential surfaces of the turning-down stitchers 38 contact with axial end portions 28b of the second ply 28, each turning-down stitcher 38 rotates about its axis that acts as the rotation axis. The turning-down stitchers 38 turn back the axial end portions 28b of the second ply 28 around the bead members 24. The end portions 28b are turned back from the radially outer side toward the radially inner side. In FIG. 5(b), the layering stitchers 40 are in the first pressing orientation. The first roller 36 and the layering stitchers 40 sandwich the ply layered body 32 therebetween.

In FIG. 5(c), the turning-down stitchers 38 are positioned axially outward and radially inward of the bead members 24. In FIG. 3, an alternate long and two short dashes line represents the turning-down stitcher 38 in this state. While the outer circumferential surfaces of the turning-down stitchers 38 contact with the axial end portions 28b of the second ply 28, each turning-down stitcher 38 rotates about its axis that acts as the rotation axis. In FIG. 5(c), the turning-down stitchers 38 further turn back the end portions 28b of the second ply 28, around the bead members 24, from the position shown in FIG. 5(b). The end portions 28b of the second ply 28 are turned back from the axially outer side toward the axially inner side. The end portions 28b are turned back toward the radially inner side of the ply layered body 32. In FIG. 5(c), the layering stitchers 40 are in the first pressing orientation. The first roller 36 and the layering stitchers 40 sandwich the ply layered body 32 therebetween.

FIG. 6(a) to FIG. 6(c) show a cross-section taken along the line IV-IV in FIG. 3. In FIG. 6(a), the layering stitchers 40 are in the first pressing orientation. The first roller 36 and the layering stitchers 40 sandwich the ply layered body 32 therebetween. In FIG. 6(a), the end portions 28b of the second ply 28 are turned back toward the radially inner side of the ply layered body 32. In FIG. 6(a), alternate long and two short dashes lines represent the turning-down stitchers 38 in the cross-section taken along the line V-V in FIG. 3. In FIG. 6(a), the turning-down stitchers 38 turn back the end portions 28b of the second ply 28 from the outer side toward the inner side in the axial direction, over the entire circumference of the ply layered body 32.

In FIG. 6(b), the layering stitchers 40 are distant from the ply layered body 32. The first roller 36 and the second roller 42 support the outer circumferential surface 32a of the ply layered body 32. The layering stitchers 40 are positioned radially inward of the end portions 28b of the second ply 28.

In FIG. 6(c), the layering stitchers 40 are positioned on the radially inner side of the end portions 28b. The first roller 36 and the layering stitchers 40 sandwich the end portions 28b of the second ply 28 therebetween. The layering stitchers 40 press the end portions 28b onto the first ply 22 of the ply layered body 32. In FIG. 6(c), the layering stitchers 40 are in a second pressing orientation.

With reference to FIG. 3 to FIG. 6, the turning-down step will be described. In the turning-down step, the not-illustrated conveying device mounts the ply layered body 32 to the ply turning-down machine 34. At this time, the turning-down stitchers 38 and the layering stitchers 40 are in the stand-by orientation. In the ply turning-down machine 34, the first roller 36 and the second roller 42 support the ply layered body 32. As shown in FIG. 4(a), the outer circumferential surface 32a of the ply layered body 32 is supported on the outer circumferential surface 36a of the first roller 36. The outer circumferential surface 32a of the ply layered body 32 is supported on the outer circumferential surface 42a of the second roller 42, which is not shown.

As shown in FIG. 4(b), the layering stitchers 40 move toward the outer circumferential surface 36a of the first roller 36. The layering stitchers 40 press the ply layered body 32 toward the first roller 36. Each layering stitcher 40 shifts its orientation from the stand-by orientation and is in the first pressing orientation. The ply layered body 32 is sandwiched between the first roller 36 and the layering stitchers 40. The first roller 36 rotates about its axis that acts as the rotation axis. By rotating of the first roller 36, the ply layered body 32 and the layering stitchers 40 rotate about their axes that act as the rotation axes.

In FIG. 5(a), FIG. 5(b), and FIG. 5(c), the ply layered body 32 is rotated about its axis that acts as the rotation axis. Each turning-down stitcher 38 rotates about its axis that acts as the rotation axis. The turning-down stitchers 38 move around the bead members 24 from the radially outer side of the ply layered body 32 toward the radially inner side thereof. The turning-down stitchers 38 turn back the end portions 28b of the second ply 28 from the radially outer side of the ply layered body 32 toward the radially inner side thereof. In the ply layered body 32, the end portions 28b of the second ply 28 are shifted from a position shown in FIG. 5(a) through a position shown in FIG. 5(b) to a position shown in FIG. 5(c).

In FIG. 6(a), the end portions 28b of the second ply 28 are turned back toward the radially inner side of the ply layered body 32 over the entire circumference. The rotation of the first roller 36 is stopped. The rotation of the ply layered body 32 is stopped. The layering stitchers 40 in the first pressing orientation move radially inward of the ply layered body 32. Further, the layering stitchers 40 move toward the axially outer sides of the ply layered body 32. The layering stitchers 40 move radially inward of the end portions 28b of the second ply 28. In this manner, the layering stitchers 40 in the first pressing orientation shown in FIG. 6(a) move to positions shown in FIG. 6(b).

The layering stitchers 40 move from the positions shown in FIG. 6(b) toward the outer circumferential surface 36a of the first roller 36. The first roller 36 and the layering stitchers 40 sandwich the ply layered body 32 therebetween. The layering stitchers 40 press the end portions 28b onto the first ply 22 of the ply layered body 32. The layering stitchers 40 shift from positions shown in FIG. 6(b) and are in the second pressing orientation shown in FIG. 6(c). The first roller 36 rotates about its axis that acts as the rotation axis. By rotating of the first roller 36, the ply layered body 32 and the layering stitchers 40 rotate. In this manner, the end portions 28b of the second ply 28 are layered over the radially inner side portion of the first ply 22 over the entire circumference.

In this manner, the bead carcass member 19 is formed from the ply layered body 32. The layering stitchers 40 are returned to the stand-by orientation. The not-illustrated conveying device removes the bead carcass member 19 from the ply turning-down machine 34.

In the preforming step, the members, including the bead carcass member 19, the tread 4, the sidewalls 6, and the like, which form the components of the tire 2 are assembled to obtain a raw cover (green tire).

In the vulcanization step, the raw cover is placed in a mold. The raw cover is vulcanized and molded at predetermined pressure and temperature. Rubber composition of the members that form the components of the tire 2 is vulcanized. The tire 2 is obtained from the raw cover.

In the ply turning-down step of the manufacturing method, the outer circumferential surface 32a of the ply layered body 32 is supported and the end portions 28b of the second ply 28 are turned down. In this method, the end portions 28b are easily layered over the radially inner side portion of the first ply 22. Thus, in the tire 2, the turned-up portions 14b of the second carcass ply 14 are layered over the axially inner side portions of the beads 8.

In the ply turning-down step, the ply layered body 32 is rotatably supported. While the ply layered body 32 is rotated, the turning-down stitchers 38 turn the end portions 28b of the second ply 28 down. While the ply layered body 32 is rotated, the layering stitchers 40 operate so as to layer the end portions 28b over the first ply 22. Thus, turning-down and layering of the end portions 28b are easily performed over the entire circumference of the ply layered body 32.

In the ply turning-down step, the first roller 36 supports the outer circumferential surface 32a of the ply layered body 32. The first roller 36 and the layering stitchers 40 support the ply layered body 32 such that the ply layered body 32 is rotatable. Further, the first roller 36 and the layering stitchers 40 sandwich the end portions 28b and the first ply 22 therebetween, and rotate the ply layered body 32. The layering stitchers 40 operate so as to layer the end portions 28b and rotate the ply layered body 32.

In the ply turning-down step, when the turning-down stitchers 38 turn down the end portions 28b of the second ply 28 from the axially outer side toward the axially inner side, the layering stitchers 40 are positioned axially inward of the end portions 28b having been turned down. The layering stitchers 40 rotate the ply layered body 32 without preventing the end portions 28b from being turned down. Even when the end portions 28b to be turned down are long, the end portions 28b can be turned down. In this viewpoint, the layering stitchers 40 are preferably positioned at the axially center portion of the ply layered body 32.

In the ply turning-down step, the outer circumferential surface 32a of the ply layered body 32 is supported and the end portions 28b of the second ply 28 are turned down. In the ply layered body 32, the first ply 22 is held over a distance between the paired bead members 24. In the ply layered body 32, the main portion 28a of the second ply 28 is cylindrically layered over the outer circumference of the main portion 22a of the first ply 22. The ply layered body 32 is used, whereby the second ply 28 is layered so as to maintain the distance between the paired bead members 24.

In the ply turning-up step, the first ply 22 is wound around the former 20 upon the outer circumferential surface 20a of the former 20. Thus, in the ply layered body 32, the first ply 22 holds the bead members 24 such that the bead members 24 are accurately spaced by a predetermined distance. In the ply layering step, the second ply 28 is layered over the outer circumferential surface of the ply turned-up body 26 having been wound around the former 20. Thus, in the ply layered body 32, the main portion 28a of the second ply 28 is layered accurately over the outer side portion of the main portion 22a of the first ply 22 without generating looseness and distortion.

In the ply turning-down step, the outer circumferential surface 32a of the ply layered body 32 is supported by the first roller 36 and the second roller 42. The first roller 36 and the second roller 42 are spaced from each other in the circumferential direction of the ply layered body 32. The center of the rotation of the ply layered body 32 is between the first roller 36 and the second roller 42 in the front-rear direction. Thus, the ply layered body 32 is stably supported by the ply turning-down machine 34. The bead carcass member 19 is stably supported. Thus, in the ply turning-down machine 34, the ply layered body 32 is easily mounted and the bead carcass member 19 is easily removed. The conveying device is allowed to easily mount the ply layered body 32 and easily remove the bead carcass member 19.

In the turning-down step, in order to stably support the outer circumferential surface 32a of the ply layered body 32, a third roller that serves as a third receiver table may be provided in addition to the first roller 36 and the second roller 42. The first roller 36, the second roller 42, and the third roller are spaced from each other in the circumferential direction of the ply layered body 32. For example, the third roller is disposed above the ply layered body 32 supported by the first roller 36 and the second roller 42, which is not shown. The third roller may be pressed onto the outer circumferential surface 32a of the ply layered body 32 by a force which does not deform the ply layered body 32. In this manner, the first roller 36, the second roller 42, and the third roller sandwich the ply layered body 32, whereby the ply layered body 32 is accurately positioned. Further, a fourth roller may be provided in addition to the third roller.

In the turning-down step, the turning-down stitchers 38 are disposed between the first roller 36 and the second roller 42 in the circumferential direction of the ply layered body 32. Thus, the end portions 28b of the second ply 28 can be easily turned down.

In the turning-down step, when an inner diameter D of the core members 24 is small, the ply layered body 32 is stably supported by the outer circumferential surface 32a being supported. In this viewpoint, the inner diameter D of the core members 24 is preferably less than or equal to 600 mm. Meanwhile, when the inner diameter D of the core members 24 is large in the ply layered body 32, the layering stitchers 40 can be easily positioned radially inward of the ply layered body 32. In this viewpoint, the inner diameter D is preferably not less than 200 mm, and more preferably not less than 350 mm.

In the vulcanization step, the raw cover of the tire 2 is vulcanized. In the vulcanization step, the raw cover is heated and pressurized. By the raw cover being heated and pressurized, the main portion 28a of the second ply 28 is drawn radially outward. In the bead carcass member 19, the end portions 28b of the second ply 28 are extended up to the axially inner side of the bead members 24. Even when a tensile force acts in the main portion 28a, positional displacement of the end portions 28b is inhibited in the second ply 28. In the tire 2, generation of positional displacement of the second carcass ply 14 is inhibited. For the tire 2, an effect of stably improving stiffness can be obtained.

A two-wheeled automotive vehicle turns such that the vehicle body is inclined inward. In order to facilitate the turning, the radius R of curvature of the tread 4 is small in the tire 2. When the vehicle runs straight with the tire 2, a center region positioned at the axially center of the tread 4 contacts with the ground, and when the vehicle turns with the tire 2, a shoulder region positioned on the axially outer side of the tread 4 contacts with the ground. In the tire 2 mounted to a two-wheeled automotive vehicle, the radius R of curvature at the equator plane is greater than or equal to 50 mm and not greater than 150 mm in general. Meanwhile, in a tire mounted to a four-wheeled automotive vehicle, the radius R of curvature at the equator plane is greater than or equal to 500 mm and not greater than 1000 mm in general.

In the vulcanization step, in a raw cover of the tire 2 in which the radius R of curvature is small, a force for drawing toward the center region of the tread 4 acts in the end portions 28b of the second ply 28 around the bead members 24. In the tire 2, the second ply 28 is turned back around the beads 8. The second ply 28 is sandwiched and fixed between the bead members 24 and a cavity surface of the mold. Positional displacement of the end portions 28b of the second ply 28 is inhibited. The manufacturing method for manufacturing the tire 2 allows an effect of improving stiffness of the tire 2 to be stably obtained. The quality of the tire 2 is stabilized.

A load applied to the tire 2 mounted to a two-wheeled automotive vehicle is less than a load applied to a tire mounted to a four-wheeled automotive vehicle. Therefore, the second ply 28 need not be turned back around the cores 16 for assuring stiffness of the tire 2. On the contrary, productivity is reduced by the second ply 28 being turned back around the cores 16. The second ply 28 is turned back around the cores 16 purposely to stably obtain an effect of improving stiffness of the tire 2. In the present invention, the outer circumferential surface 32a of the ply layered body 32 is supported, and the end portions 28a of the second ply 28 are turned down. For the tire 2, the end portions 28a of the second ply 28 are turned down without increasing reduction of productivity. In the present invention, the tire 2 can be manufactured without increasing reduction in productivity of the tire 2.

The method described above is applicable widely to a tire manufacturing method for manufacturing tires in which the second carcass ply is turned down. In particular, the method described above is applicable to a manufacturing method for manufacturing tires in which a radius of curvature of the tread is small, for example, for manufacturing tires of two-wheeled automotive vehicles.

The foregoing description is in all aspects illustrative, and various modifications can be devised without departing from the essential features of the invention.

## Claims

1. A tire manufacturing method comprising:
a manufacturing step of manufacturing a bead carcass member;
a preforming step; and
a vulcanization step, wherein
the manufacturing step of manufacturing the bead carcass member includes:
a ply turning-up step of turning up axial end portions of a first ply having been cylindrically wound, around bead members from a radially inner side toward a radially outer side, to form a ply turned-up body;
a ply layering step of layering a second ply over an outer circumferential surface of the ply turned-up body to form a ply layered body; and
a ply turning-down step of turning down axial end portions of the second ply in the ply layered body, around the bead members from the radially outer side toward the radially inner side, to form the bead carcass member,
in the ply turning-down step,
the ply layered body is supported at an outer circumferential surface thereof,
while the ply layered body is rotated, the axial end portions of the second ply are turned down around the bead members from the radially outer side toward the radially inner side, and
while the ply layered body is rotated, the axial end portions of the second ply having been turned down to an inner side of the ply layered body are layered over an inner circumferential surface of the ply layered body, to form the bead carcass member,
in the preforming step, a raw cover including the bead carcass member is formed, and
in the vulcanization step, the raw cover is placed in a mold, and is vulcanized and molded to obtain a tire.

2. The manufacturing method according to claim 1, wherein
the first ply is supported on an outer circumferential surface of a drum in the ply turning-up step, and
the ply turned-up body is supported on the outer circumferential surface of the drum in the ply layering step.

3. The manufacturing method according to claim 1, wherein in the ply turning-down step,
the outer circumferential surface of the ply layered body is supported by a first receiver table,
the axial end portions of the second ply having been turned down to the inner side of the ply layered body are layered over the inner circumferential surface of the ply layered body by a layering stitcher while the ply layered body is rotated, and
the first receiver table and the layering stitcher rotate the ply layered body.

4. The manufacturing method according to claim 3, wherein in the ply turning-down step,
the axial end portions of the second ply are turned down around the bead members from the radially outer side toward the radially inner side by a turning-down stitcher while the ply layered body is rotated, and
when the turning-down stitcher turns down the axial end portions of the second ply from an axially outer side toward an axially inner side, the layering stitcher is positioned axially inward of the axial end portions of the second ply having been turned down.

5. The manufacturing method according to claim 3, wherein in the ply turning-down step,
the outer circumferential surface of the ply layered body is supported by a second receiver table,
the first receiver table and the second receiver table are spaced from each other in a circumferential direction of the ply layered body, and
a center of rotation of the ply layered body is between the first receiver table and the second receiver table in a horizontal direction.

6. The manufacturing method according to claim 5, wherein the turning-down stitcher is positioned between the first receiver table and the second receiver table in the circumferential direction of the ply layered body.

7. The manufacturing method according to claim 5, wherein in the ply turning-down step,
the outer circumferential surface of the ply layered body is supported by a third receiver table, and
the first receiver table, the second receiver table, and the third receiver table are spaced from each other in the circumferential direction of the ply layered body.

8. The manufacturing method according to claim 1, wherein
the bead members include cores, and
each core has an inner diameter D, and the inner diameter D is less than or equal to 600 mm.

9. A manufacturing method for manufacturing a bead carcass member for a tire, the manufacturing method comprising:
a ply turning-up step of turning up axial end portions of a first ply having been cylindrically wound, around bead members from a radially inner side toward a radially outer side, to form a ply turned-up body;
a ply layering step of layering a second ply over an outer circumferential surface of the ply turned-up body to form a ply layered body; and
a ply turning-down step of turning down axial end portions of the second ply in the ply layered body, around the bead members from the radially outer side toward the radially inner side, to form the bead carcass member,
in the ply turning-down step,
the ply layered body is supported at an outer circumferential surface thereof,
while the ply layered body is rotated, the axial end portions of the second ply are turned down around the bead members from the radially outer side toward the radially inner side, and
while the ply layered body is rotated, the axial end portions of the second ply having been turned down to an inner side of the ply layered body are layered over an inner circumferential surface of the ply layered body, to form the bead carcass member.
